# EUROPEAN PATENT SPECIFICATION

(11) **EP 2 601 230 B1**
(45) Date of publication and mention of the grant of the patent: **10.01.2018**
(21) Application number: 11738748.0
(22) Date of filing: 03.08.2011
(51) Int. Cl.: C08F 283/06, C08F 290/06, C08F 2/00, C08F 4/34, C08G 18/63, C08F 283/04, C08G 101/00, C08G 65/34

(54) **PROCESS FOR PREPARING POLYMER POLYOLS**
VERFAHREN ZUR HERSTELLUNG VON POLYMERPOLYOLEN
PROCÉDÉ DE PRÉPARATION DE POLYOLS POLYMÉRIQUES

(30) Priority: 03.08.2010 EP 10171753
(43) Date of publication of application: 12.06.2013
(73) Proprietor: Shell Internationale Research Maatschappij B.V., 2596 HR Den Haag (NL)
(72) Inventor: FENNIS, Paulus, Jacobus, NL-1031 HW Amsterdam (NL); KARZIJN, Willem, NL-1031 HW Amsterdam (NL); LELIEVELD, Martinus, Johannes, Maria, NL-1031 HW Amsterdam (NL)
(74) Representative: Matthezing, Robert Maarten
(86) International application number: PCT/EP2011/063385
(87) International publication number: WO 2012/017016

(56) References cited:
- EP-A1- 1 624 005
- EP-A2- 0 439 755
- WO-A1-00/00531
- WO-A1-03/097712
- WO-A1-2008/005708
- WO-A1-2008/122581
- WO-A1-2010/076259
- US-B1- 6 455 603

## Description

The present invention relates to a process for preparing polymer polyols having a solid polymer content which is at most 60 wt.%.

Polymer polyols are commonly used for the manufacture of flexible polyurethane foams. Flexible polyurethane foams are widely used in numerous applications. Main sectors of application are automotive and aircraft industry, upholstered furniture and technical articles. For instance, full foam seats, top pads for the seats and restraints for back and head, all made from flexible polyurethane foam, are widely used in cars and aeroplanes. Other applications include the use of flexible polyurethane foam as carpet backings, bedding and mattresses, foamed seat saddles for motorbikes, gaskets between a car body and its lights, lip seals of air filters for engines and insulating layers on car parts and engine parts to reduce sound and vibration.

A problem generally encountered in the manufacture of polymer polyols, that is to say a system wherein a polymer is dispersed in a base polyol, is the production of fouling.

In chemical processes where solid material is produced, as in the present process, solids may form within the reaction mixture and may adhere to the interior walls of and any internals in the vessels wherein the chemical processes take place. Such adhesion can be so strong that after emptying the vessel, the solid material forms a residue that remains adhered to the interior walls. This solid material is known in the field as fouling. In general, fouling comprises solid material, sometimes in the form of a residue or coating, that is adhered to a surface. Portions of this fouling may become detached and become dispersed in the reaction mixture. Since the products of the present process are desirably stable dispersions of polymer particles within a polyol it will be appreciated that this loose fouling must also be removed, for example by filtration.

Especially in batch or semi-batch processes, it is desired that before a next batch is performed or after a certain number of batches, the fouling is removed as much as possible. In general, it is thought that fouling which is adhered to a surface reduces heat transfer through that surface.

A typical process for preparing a polymer polyol comprises mixing in a reactor vessel, a base polyol, one or more ethylenically unsaturated monomers, a polymerization initiator, optionally a macromer, and optionally a chain transfer agent, and polymerizing the mixture thus obtained at a temperature of 50 to 200 °C. Azobis(2-methylbutyronitrile), that is to say AMBN, is an initiator that is commonly used in the production of polymer polyols from ethylenically unsaturated monomer and base polyol. For example, WO199940144 discloses that suitable polymerization initiators in polymer polyol production include peroxide compounds and azo compounds, more specifically said AMBN.

Processes for the continuous production of polyol polymer compositions have been described previously that utilize a peroxide free-radical polymerization initiator (see US Patent No. 6455603 B; and International Patent Publication Nos. WO-A-00/00531 and WO-A-2008/005708). However, state of the art continuous processes require the presence of a preformed stabilizer. The preformed stabilizer is typically formed during a polymerization reaction following addition of a precursor stabilizer compound, such as a vinyl alkoxy silane, to the mixture at the beginning of the process. The previously described continuous processes also tend to operate at high temperatures, optimally in the region of 120°C to 140°C, most typically at around 130°C.

In continuous and batch polymer polyol production processes, fouling is formed on the interior surface of the reactor vessel walls and any internals present in the reactor vessel. Such fouling can contribute to a reduction in effective heat transfer. Heat transfer is needed to heat the reactant mixture before initiation of polymerisation and to remove the heat of the polymerisation reaction whilst it is underway. In batch processes, the reduced heat transfer results in a longer batch time. For example, the subsequent time increase for heating prior to the reaction for each batch results in fewer batches that can be performed within a defined time period.

In polymer polyol preparation processes, it is known to remove fouling as adhered to the interior surface of the reactor vessel walls by using cleaning agents, such as acetone. Cleaning agents other than acetone for removing such fouling have also been suggested in the art. For example, WO2010076259 discloses the use of an aqueous solution of a specific guanidine, including tetramethyl guanidine, in a batch process for preparing polymer polyols.

It is an object of the present invention to provide a polymer preparation process wherein the batch time increase from batch to batch is minimized or avoided completely. A reduced batch time increase would result in a significant capacity increase for the reactor vessel and the process as a whole. In addition, it is also desirable to minimize the need for intervening cleaning steps between batches, which further reduce the efficiency of the process by increasing down-time.

Surprisingly, it has been found that incidence of fouling can be reduced significantly by undertaking the polymerization reaction at a temperature below about 120°C in the presence of a polymerization initiator of formula:

R₁-C (=O) -O-O-R₂ (I)

wherein R₁ is an alkyl group and R₂ is an alkyl group of formula

-C (R₃) (R₄) -C (R₅) (R₆)(R₇) (II)

wherein R₃ and R₄ are the same or different and are an alkyl group, R₅, R₆ and R₇ are the same or different and are a hydrogen atom or an alkyl group; or where the polymerization initiator of formula (I) comprises an R₂ alkyl group of formula

-C(R₃) (R₄)-C(R_{5'}) (R_{6'})-C(R_{7'}) (R_{8'}) (R_{9'}) (III)

wherein R₃ and R₄ are the same or different and are an alkyl group, R_{5'} and R_{6'} are the same or different and are a hydrogen atom or an alkyl group, R_{7'}, R_{8'} and R_{9'} are the same or different and are a hydrogen atom or an alkyl group, with the proviso that R_{7'}, R_{8'} and R_{9'} are not all hydrogen atoms in a case where both R_{5'} and R_{6'} are hydrogen atoms.

Accordingly, the present invention provides a process for the preparation of a polymer polyol having a solid polymer content which is at most 60 wt.%, which process comprises unsaturated monomers, a polymerization initiator, optionally a macromer, and optionally a chain transfer agent, and polymerizing the mixture thus obtained at a temperature of below 120°C, wherein the initiator is of formula (I) as described above, wherein R₁ is 1-ethylpentyl and R₂ is an alkyl group of formula (II) as described above, wherein the polymerization reaction occurs substantially in the absence of a preformed stabilizer and wherein the base polyol is a polyether polyol with a nominal functionality of greater than 2.5 and a molecular weight in the range of from 2000 to 14000, and wherein at least one of R₅, R₆ and R₇ is an alkyl group and is selected from a methyl group, an ethyl group or a tertiary butyl group.

Also envisaged is a process for the preparation of a polymer polyol, which polymer polyol may have a solid polymer content which is at most around 60 wt.%, the process comprising mixing a base polyol, one or more ethylenically unsaturated monomers, a polymerization initiator, optionally a macromer, and optionally a chain transfer agent, and polymerizing the mixture thus obtained at a temperature of at least about 50°C to at most about 200°C, wherein the initiator is of the above formula (I) as described above, wherein R₁ is an alkyl group and R₂ is an alkyl group is of formula (III) as described above, wherein R₃ and R₄ are the same or different and are an alkyl group, R_{5'} and R_{6'} are the same or different and are a hydrogen atom or an alkyl group, R_{7'}, R₈, and R_{9'} are the same or different and are a hydrogen atom or an alkyl group, with the proviso that R_{7'}, R_{8'} and R_{9'} are not all hydrogen atoms in a case where both R_{5'} and R_{6'} are hydrogen atoms.

The polymerization temperature is less than about 120°C, suitably less than 115°C, more suitably about 110°C or less.

As described herein, R₁ may be an alkyl group having up to 10 carbon atoms, typically of from 4 up to 10 carbon atoms. Examples of suitable alkyl groups for R₁ are tert-butyl, 1-ethylpropyl, 1-ethylpentyl and 2,4,4-trimethylpentyl. According to the present invention, R₁ is 1-ethylpentyl.

In relation to Formula (II), typically, R₃ and R₄ are an alkyl group having up to 10 carbon atoms, more suitably of from 1 up to 4 carbon atoms. R₃ and R₄ may be selected from methyl or ethyl. In one embodiment of the invention, R₃ and R₄ are the same and are both methyl.

As described herein, R₅, R₆ and R₇ may all be a hydrogen atom in which case -C(R₅) (R₆)(R₇) is a methyl group. According to the invention, at least one of R₅, R₆ and R₇ is an alkyl group and may be selected from a methyl group, an ethyl group or a tertiary butyl group. In a specific embodiment of the invention both R₅ and R₆ are hydrogen atoms and R₇ is an alkyl group that has up to 10 carbon atoms, such as including a methyl, ethyl or tertiary butyl (tert-butyl)group.

In relation to Formula (III), typically, R₃ and R₄ are an alkyl group having up to 10 carbon atoms, more suitably of from 1 up to 4 carbon atoms. R₃ and R₄ may be selected from methyl or ethyl. In one example, R₃ and R₄ are the same and are both methyl.

In a case where R_{5'} and R_{6'} are an alkyl group, the alkyl group preferably has up to 10 carbon atoms, more preferably of from 1 up to 4 carbon atoms. R_{5'} and R_{6'} may be methyl or ethyl.

In a case where one or more of R_{7'}, R_{8'} and R_{9'} are an alkyl group, the alkyl group has up to 10 carbon atoms, optionally at least 1 and up to 4 carbon atoms. R_{7'}, R_{8'} and R_{9'} may be methyl or ethyl. In one example, R_{7'}, R_{8'} and R_{9'} are all the same and are methyl. Examples of the R₂ alkyl groups of formula (II) are tertiary-butyl, 1,1-dimethylpropyl, 1,1-dimethylbutyl, 1,1,3-trimethylbutyl, 1,1,3,3-tetramethylbutyl, 1,1,2-trimethylpropyl, 1,1,2,2-tetramethylpropyl and 1,1,2,2-tetramethylbutyl. In an embodiment of the invention the R₂ alkyl group is 1,1,3,3-tetramethylbutyl.

In specific embodiments of the invention, R₁ and R₂ are alkyl groups containing no heteroatoms, such as oxygen, nitrogen and/or sulfur.

Examples of the R₂ alkyl groups of formula (III) include 1,1-dimethylbutyl, 1,1,3-trimethylbutyl, 1,1,3,3-tetramethylbutyl, 1,1,2-trimethylpropyl, 1,1,2,2-tetramethylpropyl and 1,1,2,2-tetramethylbutyl.

In a specific embodiment of the invention, the initiator is 1,1,3,3-tetramethylbutyl peroxy-2-ethylhexanoate, that is to say a compound of formula (I) wherein R₁ is 1-ethylpentyl and R₂ is 1,1,3,3-tetramethylbutyl.

Use of said 1,1,3,3-tetramethylbutyl peroxy-2-ethylhexanoate in the production of polymer polyols is suggested in EP1624005. Said EP1624005 discloses a process for making a polymer polyol, comprising free-radical polymerizing a base polyol, a high potency preformed stabilizer, at least 1 ethylenically unsaturated monomer, at least 1 free-radical polymerization initiator, and a chain transfer agent. Said 1,1,3,3-tetramethylbutyl peroxy-2-ethylhexanoate is suggested as only 1 of many initiators that could be used in such process. Besides, EP1624005 additionally requires the presence of a preformed stabilizer and also that the polymer polyol be an "ultra-high solids" polymer polyol. As defined in EP1624005, "ultra-high solids" means that the content of solid polymer in the polymer polyol is greater than 60 wt.%. In addition, the reaction temperatures disclosed in said EP1624005 are broadly in excess of 120°C for initiators of the type used in the present invention.

In the present invention, the solid polymer content of the polymer polyol, which is the amount of solid polymer based on the total amount of polymer and polyol, is at most 60 wt.%. Suitably, the solid polymer content is of from 25 to 55 wt.%. Preferably, the solid polymer content is of from 30 to 55 wt.%, more preferably of from 35 to 55 wt.%.

The present process may be a continuous, batch or semi-batch process. However, the present process works well as a batch or semi-batch process. In the latter case one or more compounds are added to the reactor continuously for a limited amount of time. Such continuous addition may take place when adding the compounds to be mixed in an initial phase and/or when adding the compounds after such initial phase. Batch operation and semi-batch operation differ from continuous operation in that in batch and semi-batch operation the product is removed from the reactor discontinuously. The fouling behaviour may vary between batch and continuous operation.

The process of the present invention shows particular advantage in reducing the level of reactor wall fouling that can result in a reduction in effective heat transfer during the polymerization reaction. It will be appreciated that in batch, semi-batch and continuous processes effective heat transfer is essential in order to ensure efficient operation (i.e. reduce the need for increased energy consumption) as well as to maintain effective control of the reaction process. In an embodiment of the invention described in more detail below, in a batch process the batch-to-batch time increase was reduced by nearly 60% when a polymerization initiator of formula I was used under reaction conditions of the invention. Further, the rate of filter replacement was also reduced by around one third when compared to processes using a different initiator. As described herein, a polymer polyol may be prepared by mixing a base polyol, one or more ethylenically unsaturated monomers, a polymerization initiator, optionally a macromer, and optionally a chain transfer agent, and polymerizing the mixture thus obtained at a temperature of 50 to 200°C. Processes for preparing polymer polyols are for example disclosed in WO1999040144, WO2003097712 and WO2008122581.

Such polymer polyol preparation is preferably carried out in a stainless steel reactor vessel. Further, preferably, the reactor vessel is a continuously stirred tank reactor, more preferably a stainless steel, continuously stirred tank reactor.

As described herein, the temperature at which polymerization is carried out, may be comprised in the range of from 50 to 200 °C, suitably 70 to 150 °C, more preferably 80 to 130 °C. According to the invention the polymerization temperature is less than about 120°C, suitably less than 115°C, more suitably about 110°C or less. Further, it is preferred that during the entire polymerization process, the temperature is maintained constant at a certain value, with the proviso that a deviation of plus or minus 10 °C from said value is still allowable. Within said preferred embodiment, it is preferred that during the entire polymerization process, the temperature is maintained at a value comprised in the range of from about 70 to about 120 °C, preferably about 80 to about 115 °C.

The pressure at which polymerization may be carried out, is suitably comprised in the range of from 0.01 to 5 bar absolute, more suitably 0.05 to 4 bar absolute.

The base polyol used is a polyether polyol, also frequently referred to as polyoxyalkylene polyols. Such polyether polyols are typically obtained by reacting a starting compound having a plurality of active hydrogen atoms with one or more alkylene oxides, such as ethylene oxide, propylene oxide, butylene oxide or mixtures of two or more of these. As described herein, suitable polyether polyols are those having a nominal molecular weight in the range of from 350 to 15,000. In addition, as described herein, the polyether polyols suitably have an average nominal functionality (Fn) of at least 2.0, typically greater than 2.0 and in one example an average Fn of at least about 2.9. According to the invention it has been found particularly advantageous to use polyols having a molecular weight in the range of from 2000 to 14,000. Such polyols further have a Fn greater than 2.5, and suitably in the range of from around 2.5 to around 3.0. The hydroxyl value of the polyol suitably has a value of from 10 to 150 mg KOH/g, more suitably of from 20 to 75 mg KOH/g. Examples of suitable polyols include CARADOL SC46-02, CARADOL SC36-13, CARADOL MC36-03, CARADOL SC56-02, CARADOL SC36-11, CARADOL SC48-03 and CARADOL MH56-03 (CARADOL is a trademark). Most preferably, CARADOL SC56-02 polyol and CARADOL SC48-03 polyol are used.

Suitable ethylenically unsaturated monomers for preparing the dispersed polymer include vinyl aromatic hydrocarbons, like styrene, alpha-methyl styrene, beta-methyl styrene and various other alkyl-substituted styrenes. Of these, the use of styrene is preferred. The vinyl aromatic monomer may be used alone or in combination with other ethylenically unsaturated monomers, such as acrylonitrile, methacrylonitrile, vinylidene chloride, various acrylates and conjugated dienes like 1,3-butadiene and isoprene. Preferred ethylenically unsaturated monomers to be used for the purpose of the present invention are styrene and acrylonitrile in a weight ratio of from 30:70 to 100:0. It is, however, particularly preferred to use styrene alone or a combination of styrene and acrylonitrile in a weight ratio styrene:acrylonitrile of from 50:50 to 75:25, resulting in dispersed polystyrene and styreneacrylonitrile (SAN) copolymer, respectively.

Preferably, a macromer is fed when preparing the polymer polyol. Within the present specification, a macromer is considered to be a polyol which may contain one or more unsaturations and which purpose is to effect a stable dispersion of the polymer particles in the base polyol, said polymer particles obtained from polymerizing one or more ethylenically unsaturated monomers. Macromers which can be used include, but are not limited to the reaction product of a polyol with a reactive unsaturated compound such as maleic anhydride, phthalic anhydride, fumaric acid, 1,1-dimethyl-m-isopropenyl-benzyl-isocyanate, isocyanatoethylmethacrylate, hydroxyethylmethacrylate, hydroxypropyl acrylate, methyl methacrylate, acrylic and methacrylic acid, methacroyl chloride, glycidyl methacrylate and allyl glycidyl ether. If a polycarboxylic acid or anhydride is employed, it is preferred to react the unsaturated polyol with an alkylene oxide. The polyol for preparing the macromer preferably has a hydroxyl functionality of at least 2.

A suitable macromer has been described in WO199940144. Such macromer is suitable as a stabiliser precursor in a polymer polyol, and has been prepared by a process which comprises reacting a polyol with a cyclic dicarboxylic acid anhydride not containing any polymerizable double bond, and subsequently reacting the adduct thus obtained with an epoxide compound containing a polymerizable double bond. The polyol preferably is sorbitol or a mixture of sorbitol with one or more diols (including water), said sorbitol or said mixture having reacted with a mixture of propylene oxide and ethylene oxide. The cyclic dicarboxylic acid anhydride preferably is phthalic anhydride. The epoxide compound preferably is glycidyl methacrylate or glycidyl acrylate. The adduct can first partly be reacted with a di- or higher functional epoxide compound before being reacted with the epoxide compound containing a polymerizable double bond. Further, the polyol can be reacted with a di-or higher functional isocyanate compound preceding the reaction between the polyol and the cyclic dicarboxylic acid anhydride. A method for preparing the macromer comprises reacting the adduct first partly with the epoxide compound containing a polymerizable double bond and subsequently reacting the reaction product thus obtained with a di- or higher functional epoxide compound or a di-or higher functional isocyanate compound.

The macromer suitably has a nominal molecular weight of at least 4000, typically in the range of from 5000 to 50,000.

The amount of ethylenically unsaturated monomers present during the process of the present invention can vary widely. At any time during the process according to the present invention, the amount of ethylenically unsaturated monomer will generally differ between of from 0 to 60% by weight based on total weight of base polyol, polymer, monomer(s) and optionally macromer. It is possible to have all base polyol fed initially, while it is also possible to add the majority of the base polyol after initiation of polymerization.

The additional base polyol optionally added after initiation of polymerization can be the same or can be different from the base polyol as initially fed. Preferably, the base polyol remains the same.

The polymerization initiator is usually applied in an amount of from 0.01 to 5% by weight based on total weight of monomers.
Chain transfer agents may also be added to or be present in the polymerization reaction medium. Preferably, they are fed to the reactor in the initial phase of the present process. The use of chain transfer agents and their nature is known in the art. Chain transfer agents enable a control of the molecular weight and/or the cross-linking occurring between the various polymer molecules and hence may affect stability of the polymer polyol. If used at all, a chain transfer agent is suitably used in an amount of from 0.1 to 20% by weight, more suitably 0.2 to 10% by weight, and most suitably 0.3 to 7% by weight, based on total weight of end product. Examples of suitable chain transfer agents are 1-butanol, 2-butanol, isopropanol, ethanol, methanol, cyclohexane and mercaptans, such as dodecanethiol, ethanethiol, 1-heptanethiol, 2-octanethiol and toluenethiol. Preferably, isopropanol is used as a chain transfer agent.

Other compounds, such as compounds facilitating mixing of the various components, compounds which have a viscosity-lowering effect and/or compounds which enable one or more of the components used to better dissolve in the reaction medium may also be applied. An example of a compound having a viscosity-lowering effect, thus enabling a better mixing of the components, is toluene. Auxiliaries like toluene can be present in the feed and/or in the reactor.

According to the invention the polymerization reaction occurs substantially in the absence of a preformed stabilizer. Preformed stabilizer is typically a small amount of a preformed copolymer of styrene, acrylonitrile and a macromer in the polymerization mixture that is formed separately and dosed into the reaction in order to stabilize the mixture. In this way the preformed stabilizer is a component that is added to the process as a separate ingredient. It is usually the reaction product of a macromer, in presence of styrene, acrylonitrile, and solvents/chain transfer agents like e.g. IPA, toluene and/or a polyol, and also a radical initiator. The preformed stabilizer is typically stored in a buffer tank/vessel from which it is dosed to the polymer polyol process. In the present invention it is not necessary to introduce one or more preformed stabilizer components to the reaction mixture prior to the polymerization step which represents a considerable advantage over previously known methods.

The present invention also relates to a polymer polyol, preferably a by-product free polymer polyol, obtainable by the process of the present invention.

The polymer polyol obtainable by the process of the present invention is very suitable for the preparation of polyurethane foams, especially flexible polyurethane foams, by reacting it with a suitable polyisocyanate in the presence of one or more suitable polyurethane catalysts, a suitable blowing agent, one or more surfactants, and optionally a cross-linking agent. This reaction is also commonly denoted as foaming. Therefore, the present invention also relates to a process for preparing a polyurethane foam by foaming a composition comprising a polymer polyol obtainable by the process of the present invention and a polyisocyanate component.

Further, the present invention relates to a polyurethane foam obtainable by said foaming process. Still further, the present invention relates to a shaped article comprising said polyurethane foam.

Polyurethane catalysts are known in the art and include many different compounds. An extensive list of polyurethane catalysts is, for instance, given in U.S. patent specification No. 5,011,908. For the purpose of the present invention, suitable catalysts include tin-based catalysts, such as tin salts and dialkyl tin salts of carboxylic acids. Specific examples are stannous octoate, stannous oleate, dibutyltin dilaureate, dibutyltin acetate and dibutyltin diacetate. Other suitable catalysts are tertiary amines, such as, for instance, bis(2,2'-dimethylamino)ethyl ether, trimethylamine, triethylamine, triethylenediamine and dimethylethanolamine. Examples of commercially available tertiary amine catalysts are those sold under the tradenames NIAX, TEGOAMIN and DABCO (all trademarks). The catalyst is typically used in an amount of from 0.01 to 2.0 parts by weight per hundred parts by weight of polymer polyol (php). Preferred amounts of catalyst are from 0.05 to 1.0 php.

The use of cross-linking agents in the production of polyurethane foams is well known. Polyfunctional glycol amines are known to be useful for this purpose. The polyfunctional glycol amine which is most frequently used and is also useful in the preparation of the present flexible polyurethane foams, is diethanol amine, often abbreviated as DEA or DEOA. If used at all, the cross-linking agent is applied in amounts up to 3.0 php, but amounts in the range of from 0.2 to 1.5 php are most suitably applied.

Suitable blowing agents include water, acetone, (liquid) carbon dioxide, halogenated hydrocarbons, aliphatic alkanes and alicyclic alkanes. Due to the ozone depleting effect of the fully chlorinated, fluorinated alkanes (CFC's) the use of this type of blowing agents is generally not preferred, although it is possible to use them within the scope of the present invention. The halogenated alkanes, wherein at least one hydrogen atom has not been substituted by a halogen atom (the so-called HCFC's) have no or hardly any ozone depleting effect and therefore are the preferred halogenated hydrocarbons to be used in physically blown foams. A very suitable HCFC type blowing agent is 1-chloro-1,1-difluoroethane. The use of water as a (chemical) blowing agent is also well known. Water reacts with isocyanate groups according to the well known NCO/H₂O reaction, thereby releasing carbon dioxide which causes the blowing to occur. The aliphatic and alicyclic alkanes, finally, were developed as alternative blowing agents for the CFC's. Examples of such alkanes are n-pentane and n-hexane (aliphatic) and cyclopentane and cyclohexane (alicyclic). It will be understood that the above blowing agents may be used singly or in mixtures of two or more. The amounts wherein the blowing agents are to be used are those conventionally applied, i.e. between 0.1 to 5 php in case of water and between about 0.1 and 20 php in case of halogenated hydrocarbons, aliphatic alkanes and alicyclic alkanes.

In addition, other well known auxiliaries, such as flame retardants, foam stabilisers (surfactants) and fillers may also be used in the manufacture of polyurethane foams. Organosilicone surfactants are most conventionally applied as foam stabilisers in polyurethane production. A large variety of such organosilicone surfactants is commercially available. Usually, such foam stabiliser is used in an amount of up to 5% by weight based on the reaction mixture of polymer polyol reactant and polyisocyanate reactant.

The invention is further illustrated in the following non-limiting Examples.

### Reference Example 1

A polymer polyol was prepared by applying the following batch procedure, wherein the following compounds were used:
Base polyol = a polyether polyol containing randomly distributed ethyleneoxy and propyleneoxy monomers in the weight ratio of about 11/89. It was produced by using glycerol as the initiator and potassium hydroxide (KOH) as the catalyst. The base polyol had a weight average molecular weight of about 3,000 and had a OH value of about 54 mg KOH/g.
Styrene and acrylonitrile = ethylenically unsaturated monomers.
AMBN = azobis(2-methylbutyronitrile) (polymerization initiator).
Macromer = a polyol (in accordance with WO1999040144) having the following structure: 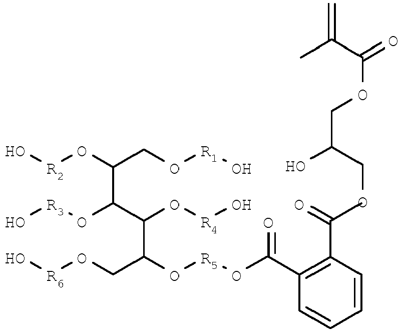
wherein R₁ to R₆ represent chains comprising randomly distributed propylene oxide (PO) and ethylene oxide (EO) monomers. The weight ratio of PO to EO in these chains was about 82/18. The weight average molecular weight per chain, averaged over all six chains, amounted to about 2,000.

IPA = isopropanol (chain transfer agent).

In the start-up phase of the batch, 182.5 g base polyol, 40.4 g macromer, 45.5 g IPA, 7.8 g styrene and 2.8 g acrylonitrile were fed to a reactor. The reactor was a stainless steel, continuously stirred tank reactor. Further, heating of the contents of the reactor to 100 °C was performed. This heating was attained by external heating, with steam, of the reactor wall.

Once the contents of the reactor had a temperature of about 100 °C, the polymerisation was started by feeding 52.3 g of an 8 wt.% solution of the polymerization initiator AMBN in the base polyol, 296.3 g base polyol, 295.7 g styrene and 140.1 g acrylonitrile to the reactor. The polymerization temperature within the reactor was maintained at 100 °C.

### Example 1

A polymer polyol was prepared by applying the following batch procedure.

In the start-up phase of the batch, 182.5 g base polyol, 40.4 g macromer, 45.5 g IPA, 7.8 g styrene and 2.8 g acrylonitrile were fed to a reactor. The reactor was a stainless steel, continuously stirred tank reactor. Further, heating of the contents of the reactor to 100 °C was performed. This heating was attained by external heating, with steam, of the reactor wall.

Once the contents of the reactor had a temperature of about 100 °C, the polymerisation was started by feeding 52.3 g of a 5 wt.% solution of a polymerization initiator in base polyol, 296.3 g base polyol, 295.7 g styrene and 140.1 g acrylonitrile to the reactor. The polymerization temperature within the reactor was maintained between 100 and 110 °C.

The base polyol and macromer were the same as the base polyol and macromer used in Reference Example 1.

The polymerization initiator was 1,1,3,3-tetramethylbutyl peroxy-2-ethylhexanoate. Such initiator is a compound of formula R₁-C(=O)-O-O-R₂ wherein R₁ is 1-ethylpentyl and R₂ is 1,1,3,3-tetramethylbutyl, that is to say a compound of the following formula:

CH₃(CH₂)₃CH(CH₂CH₃)-C(=O)-O-O-(CH₃)₂CCH₂C(CH₃)₃

### Example 1 and Reference Example 1 on Large Scale

A batch procedure similar to the one as described above in Reference Example 1, using AMBN as the initiator, was performed on a large scale. After discharging the reactor content, a new batch procedure was started. For each batch procedure, the batch time increased as compared to the batch time of the preceding batch procedure. The average batch time increase for batches 6 to 34 was 0.92 minute (per batch).

Before change of the initiator, an acetone clean-out was performed in order to remove fouling as adhered to the interior walls of and internals in the reactor.

After said acetone washing, a batch procedure similar to the one as described above in Example 1, using 1,1,3,3-tetramethylbutyl peroxy-2-ethylhexanoate as the initiator rather than AMBN, was performed on a large scale. After discharging the reactor content, a new batch procedure was started. For each batch procedure, the batch time increased as compared to the batch time of the preceding batch procedure. The average batch time increase for batches 6 to 34 was only 0.39 minute (per batch). This smaller average batch time increase as compared to when using AMBN as the initiator (0.92 minute as mentioned above) indicates that, surprisingly, less fouling is produced when using 1,1,3,3-tetramethylbutyl peroxy-2-ethylhexanoate as the initiator.

That less fouling is produced by the use of 1,1,3,3-tetramethylbutyl peroxy-2-ethylhexanoate as the initiator was also demonstrated by the effect on the number of filter replacements. At the end of each of the above batch procedures, the reactor content had to be discharged. This was performed by passing the reactor content through a filter and into another vessel. The filter was used to remove any loose fouling that may be present in the reactor content. This fouling is retained by the filter. If there is too much fouling retained by the filter, the polymer polyol product may no longer pass through the filter, in which case the filter needed to be replaced by a clean filter.

It has appeared that when using AMBN as the initiator in the above batch procedures, 0.26 filters per batch were required. On the other hand, when using 1,1,3,3-tetramethylbutyl peroxy-2-ethylhexanoate as the initiator in the above batch procedures, only 0.17 filters per batch were required.

The solid polymer content of the polymer polyol product obtained after each of the above batch procedures, wherein the initiator was either AMBN or 1,1,3,3-tetramethylbutyl peroxy-2-ethylhexanoate, was about 43 wt.%.

Although particular embodiments of the invention have been disclosed herein in detail, this has been done by way of example and for the purposes of illustration only. The aforementioned embodiments are not intended to be limiting with respect to the scope of the appended claims, which follow. It is contemplated by the inventors that various substitutions, alterations, and modifications may be made to the invention without departing from the scope of the invention as defined by the claims.

## Claims

1. A process for the preparation of a polymer polyol having a solid polymer content which is at most 60 wt.%, which process comprises mixing a base polyol, one or more ethylenically unsaturated monomers, a polymerization initiator, optionally a macromer, and optionally a chain transfer agent, and polymerizing the mixture thus obtained at a temperature of below 120°C, wherein the initiator is of formula
R1-C(=O)-O-O-R2 (I)
wherein R1 is 1-ethylpentyl and R2 is an alkyl group of formula
-C(R3)(R4)-C(R5)(R6)(R7) (II)
wherein R3 and R4 are the same or different and are an alkyl group, R5, R6 and R7 are the same or different and are a hydrogen atom or an alkyl group, wherein the polymerization reaction occurs substantially in the absence of a preformed stabilizer and wherein the base polyol is a polyether polyol with an average nominal functionality of greater than 2.5 and a molecular weight in the range of from 2000 to 14000, and wherein at least one of R5, R6 and R7 is an alkyl group and is selected from a methyl group, an ethyl group or a tertiary butyl group.

2. The process of claim 1, wherein R2 is selected from: tertiary-butyl, 1,1-dimethylpropyl, 1,1-dimethylbutyl, 1,1,3-trimethylbutyl, 1,1,3,3-tetramethylbutyl, 1,1,2-trimethylpropyl, 1,1,2,2-tetramethylpropyl or 1,1,2,2-tetramethylbutyl.

3. The process of claim 1, wherein the polymerization temperature is optionally less than about 115°C, more suitably about 110°C or less.

4. The process of any one of claims 1 to 3, wherein R2 is 1,1,3,3-tetramethylbutyl.

5. The process of any one of the preceding claims, wherein a macromer is used and the macromer is obtained by reacting a polyol with a cyclic dicarboxylic acid anhydride not containing any polymerizable double bond, and subsequently reacting the adduct thus obtained with an epoxide compound containing a polymerizable double bond.

6. A process for preparing a polyurethane foam by foaming a composition comprising a polymer polyol obtainable by the process according to any one of claims 1 to 5 and a polyisocyanate component.

7. A polyurethane foam obtainable by the process according to claim 6.

## Patentansprüche

1. Verfahren zur Herstellung eines polymeren Polyols mit einem Polymer-Feststoffgehalt von höchstens 60 Gew.%, wobei das Verfahren das Mischen eines Basis-Polyols, eines oder mehrerer ethylenisch ungesättigter Monomere, eines Polymerisationsinitiators, gegebenenfalls eines Makromers und gegebenenfalls eines Kettenübertragungsmittels umfasst; und Polymerisieren der so erhaltenen Mischung bei einer Temperatur unterhalb von 120 °C, wobei der Initiator die Formel hat
R₁-C(=O)-O-O-R₂ (I),
wobei R₁ 1-Ethylpentyl ist und R₂ eine Alkylgruppe der Formel
-C(R₃) (R₄)-C(R₅)(R₆)(R₇) (II)
ist, wobei R₃ und R₄ gleich oder verschieden sind und eine Alkylgruppe sind, R₅, R₆ und R₇ gleich oder verschieden sind und ein Wasserstoffatom oder eine Alkylgruppe sind, wobei die Polymerisationsreaktion im Wesentlichen in Abwesenheit eines vorgeformten Stabilisators erfolgt, und wobei das Basis-Polyol ein Polyetherpolyol mit einer durchschnittlichen nominellen Funktionalität von grösser als 2,5 und einem Molekulargewicht im Bereich von 2.000 bis 14.000 ist, und wobei mindestens eines von R₅, R₆ und R₇ eine Alkylgruppe ist und ausgewählt ist aus einer Methylgruppe, einer Ethylgruppe oder eine tertiären Butylgruppe.

2. Verfahren nach Anspruch 1, wobei R₂ ausgewählt ist aus: *tert-Butyl,* 1,1-Dimethylpropyl, 1,1-Dimethylbutyl, 1,1,3-Trimethylbutyl, 1,1,3,3-Tetramethylbutyl, 1,1,2-Trimethylpropyl, 1,1,2,2-Tetramethylpropyl oder 1,1,2,2-Tetramethylbutyl.

3. Verfahren nach Anspruch 1, wobei die Polymerisationstemperatur wahlweise weniger als etwa 115 °C, geeigneter Weise etwa 110 °C oder weniger beträgt.

4. Verfahren nach einem der Ansprüche 1 bis 3, wobei R₂ 1,1,3,3-Tetramethylbutyl ist.

5. Verfahren nach einem der vorhergehenden Ansprüche, wobei ein Makromer verwendet wird und das Makromer erhalten wird durch Umsetzen eines Polyols mit einem cyclischen, keine polymerisierbare Doppelbindung enthaltendem Dicarbonsäureanhydrid, und anschließender Umsetzung des so erhaltenen Adduktes mit einer Epoxidverbindung, die eine polymerisierbaren Doppelbindung enthält.

6. Verfahren zur Herstellung eines Polyurethanschaumes durch Verschäumen einer Zusammensetzung, umfassend ein polymeres Polyol, das mit Hilfe des Verfahrens nach einem der Ansprüche 1 bis 5 erhalten werden kann, sowie eine Polyisocyanat-Komponente,

7. Polyurethanschaumstoff, erhältlich mit Hilfe des Verfahrens nach Anspruch 6.

## Revendications

1. Procédé de préparation d'un polyol polymérique ayant une teneur en polymère solide qui est d'au plus 60 % en poids, lequel procédé comprend le mélange d'un polyol de base, d'un ou plusieurs monomères éthyléniquement insaturés, d'un initiateur de polymérisation, facultativement d'un macromère, et facultativement d'un agent de transfert de chaîne, et la polymérisation du mélange ainsi obtenu à une température en-dessous de 120 °C, dans lequel l'initiateur est représenté par la formule
R1-C(=O)-O-O-R2 (I)
dans laquelle R1 est 1-éthylpentyl et R2 est un groupe alkyle représenté par la formule
-C(R3)(R4)-C(R5)(R6)(R7) (II)
dans laquelle R3 et R4 sont identiques ou différents et sont un groupe alkyle, R5, R6 et R7 sont identiques ou différents et sont un atome d'hydrogène ou un groupe alkyle, dans laquelle la réaction de polymérisation se produit sensiblement en l'absence d'un stabilisateur préformé et dans laquelle le polyol de base est un polyéther polyol avec une fonctionnalité nominale moyenne supérieure à 2,5 et un poids moléculaire dans la plage de 2 000 à 14 000, et dans laquelle au moins l'un de R5, R6 et R7 est un groupe alkyle et est choisi parmi un groupe méthyle, un groupe éthyle ou un groupe tertiobutyle.

2. Procédé selon la revendication 1, dans lequel R2 est choisi parmi : tertiobutyl, 1,1-diméthylpropyl, 1,1-diméthylbutyl, 1,1,3-triméthylbutyl, 1,1,3,3-tétraméthylbutyl, 1,1,2-triméthylpropyl, 1,1,2,2-tétraméthylpropyl ou 1,1,2,2-tétraméthylbutyl.

3. Procédé selon la revendication 1, dans lequel la température de polymérisation est facultativement inférieure à environ 115 °C, de façon plus appropriée environ 110 °C ou moins.

4. Procédé selon l'une quelconque des revendications 1 à 3, dans lequel R2 est 1,1,3,3-tétraméthylbutyl.

5. Procédé selon l'une quelconque des revendications précédentes, dans lequel un macromère est utilisé et le macromère est obtenu par réaction d'un polyol avec un anhydride d'acide dicarboxylique cyclique ne contenant aucune double liaison polymérisable, et par réaction ensuite du produit d'addition ainsi obtenu avec un composé époxyde contenant une double liaison polymérisable.

6. Procédé de préparation d'une mousse de polyuréthane par moussage d'une composition comprenant un polyol polymérique pouvant être obtenu par le procédé selon l'une quelconque des revendications 1 à 5 et un composant polyisocyanate.

7. Mousse de polyuréthane pouvant être obtenue par le procédé selon la revendication 6.
